# EUROPÄISCHE PATENTSCHRIFT

(11) **EP 1 622 320 B1**
(45) Veröffentlichungstag und Bekanntmachung des Hinweises auf die Patenterteilung: **01.10.2014**
(21) Anmeldenummer: 05106343.6
(22) Anmeldetag: 12.07.2005
(51) Int. Cl.: H04L 12/413, B60R 16/02, H04L 9/32

(54) **Kommunikationsverfahren für wenigstens zwei Systemkomponenten eines Kraftfahrzeugs**
A telecommunication method for at least two system components of a motor vehicle
Procédé de communication pour au moins deux composants de système d'un véhicule automobile

(30) Priorität: 29.07.2004 DE 102004036810
(43) Veröffentlichungstag der Anmeldung: 01.02.2006
(73) Patentinhaber: ZF-Lenksysteme GmbH, 73527 Schwäbisch Gmünd (DE)
(72) Erfinder: Reinelt, Wolfgang, 70374 Stuttgart (DE)

(56) Entgegenhaltungen:
- US-A- 5 253 294
- US-A- 6 052 466
- US-A1- 2003 219 129
- MENEZES, OORSCHOT, VANSTONE: "Handbook of Applied Cryptography" HANDBOOK OF APPLIED CRYPTOGRAPHY, CRC PRESS SERIES ON DISCRETE MATHEMATICS AND ITS APPLICATIONS, 1997, Seiten 395-397, XP002438982 , BOCA RATON, FL, US ISBN: 0-8493-8523-7
- DAIS S ET AL: "TECHNISCHES KONZEPT DES SERIELLEN BUS-SYSTEMS CAN. ÖTEIL 1" ATZ AUTOMOBILTECHNISCHE ZEITSCHRIFT, VIEWEG PUBLISHING, WIESBADEN, DE, Bd. 94, Nr. 2, 1. Februar 1992 (1992-02-01), Seiten 66-70,73, XP000246529 ISSN: 0001-2785
- O'GORMAN L: "Comparing passwords, tokens, and biometrics for user authentication" PROCEEDINGS OF THE IEEE, IEEE. NEW YORK, US, Bd. 91, Nr. 12, Dezember 2003 (2003-12), Seiten 2021-2040, XP002431667 ISSN: 0018-9219

## Beschreibung

Die Erfindung betrifft Kommunikationsverfahren für wenigstens zwei Systemkomponenten eines Kraftfahrzeugs.

Systemkomponenten in Kraftfahrzeugen, insbesondere Steuergeräte, tauschen mitunter sicherheitsrelevante Daten aus. Dies betrifft vor allem Fahrzeugsystemkomponenten (z.B. Lenksysteme oder dergleichen), die übergeordneten Fahrzeugsystemkomponenten (z.B. ESP, etc.) direkte Durchgriffskanäle auf die Aktuatorik (Aktivlenksysteme, Niveauregulierung, Bremsen) ermöglichen.

Bekannte Sicherheitsnormen fordern eine adäquate Sicherheit bzw. Zuverlässigkeit des Übertragungsmediums, welches im Allgemeinen das CAN-Bussystem des Kraftfahrzeugs ist. Dabei spielen die sogenannten Safety-Integrity-Level-Definitionen (SIL nach IEC 61508) eine wichtige Rolle. Aus bekannten Normen sind zwei grundlegende Forderungen (F1, F2) herleitbar:
F1: Der Zeitpunkt des Abschickens des Signals beim Sender muss vom Empfänger verifiziert werden können.
F2: Die Wahrscheinlichkeit einer Datenkorruption auf dem Übertragungsmedium darf eine geforderte Größe nicht überschreiten.
   An die Kommunikation mit oben erwähnten sicherheitskritischen Fahrzeugsystemen bzw. Fahrzeugsystemkomponenten, welche direkte Zugriffsmöglichkeiten auf die Aktuatorik des Kraftfahrzeugs erlauben, wird eine dritte Forderung (F3) hinsichtlich der Authentizität des Senders, d. h. des übergeordneten Fahrzeugssystems gestellt:
F3: Der Absender der Nachricht bzw. Anforderung muss identifiziert werden können.

Diese Forderung ergibt sich aus der Tatsache, dass nachgerüstete Drittsysteme (sogenannte Tuning-Sets) leicht die Anforderungen bzw. Anweisungen der übergeordneten Fahrzeugsysteme auf dem Übertragungsmedium (CAN-Bus) identifizieren und durch eigene, veränderte Anforderungen ersetzen können. Problematisch ist dabei, dass derartige Anforderungen unter Umständen auf mangelhaften Sicherheitskonzepten beruhen und eine Gefahr von Fehlansteuerungen der Aktuatorik mit sich bringen. Des weiteren muss davon ausgegangen werden, dass die Maßnahmen zur Absicherung der Kommunikation zwischen den übergeordneten Steuergeräten und den Aktuatorsteuergeräten im Kraftfahrzeug teilweise bekannt werden - sei es durch illegalen Erhalt der zugrundeliegenden Steuergerätsoftware (Bitfehlererkennung, Signalaufbereitung der sogenannte Standard-Core des Herstellers), durch Re-Engineering-Maßnahmen (Auslesen fixer Speicher z.B. EEPROM, Strombedarf des Steuergeräts) oder durch sogenannte Seitenkanalattacken.

Während die oben genannte Forderung F1 durch Zeitstempel und Zähler in den CAN-Busnachrichten heutzutage bereits ausreichend erfüllt wird, wurde mehrfach nachgewiesen, dass die Forderungen F2 und F3 durch den Stand der Technik bzw. das übliche CAN-Busprotokoll mit einer CRC-15-Prüfsumme (Bitfehlererkennung durch Cyclic Redundancy Check) nur unzureichend bzw. gar nicht erfüllt werden.

In der Kryptographie können Restfehlerwahrscheinlichkeiten für das Auftreten von Bitfehlern bei der Übertragung für entsprechende CRC-Prüfsummen hergeleitet werden.

Des weiteren sind Verfahren bekannt, welche die Authentizität von Sendern und Empfängern nachweisen. Neben üblichen Anwendungen wie WLAN oder Bluetooth ist dies beispielsweise aus "Wollinger, Guajardo und Paar; Cryptography in Embedded Systems: An Overview; Proceedings of the Embedded World 2003 Exhibition and Conference, pp. 735-744, Design & Elektronik, Nürnberg, Deutschland, 18.-20.02.2003" auch für Embedded Systems bekannt. Derartige Lösungen sind jedoch aufgrund der erforderlichen hohen Netzwerkbandbreiten bzw. hohen Rechenintensitäten im Automotive-Bereich nur schwer einsetzbar. Auch Lösungsansätze für sogenannte Sensor- oder Ad-hoc-Netzwerke, welche eine geringe Rechenleistung fordern, benötigen für die Fahrzeug-CAN-Bussysteme zu lange CRC-Prüfsummen.

Das Dokument MENEZES, OORSCHOT, VANSTONE: "Handbook of Applied Cryptography", CRC PRESS SERIES ON DISCRETE MATHEMATICS AND ITS APPLICATIONS, 1997, Seiten 395-397, XP002438982, BOCA RATON, FL, US, offenbart auf Einmal-Passwörtern basierende Authentifizierungsverfahren. Unter Anderem ist dort die Verwendung von Einwegfunktionen nach dem bekannten Lamport-Verfahren beschrieben.

Der vorliegenden Erfindung liegt somit die Aufgabe zugrunde, Kommunikationsverfahren der eingangs erwähnten Art zu schaffen, welche eine sichere und ressourcenschonende Kommunikation ermöglichen.

Diese Aufgabe wird erfindungsgemäß durch Anspruch 1 gelöst.

Durch diese Maßnahmen wird in einfacher und vorteilhafter Weise eine zuverlässige und abhörsichere Kommunikation zwischen Systemkomponenten eines Kraftfahrzeugs geschaffen. Durch eine Kombination von vereinbarten Prüfcodes mit einer durch eine Hash-Funktion definierten Sendereihenfolge wird eine sichere Authentifizierung der Sender ermöglicht. Somit können beispielsweise Anforderungen von Eindringlingen ignoriert werden, wenn eine fehlende Authentizität nachgewiesen wird. Durch Eindringlinge hervorgerufene Fehlansteuerungen werden somit weitgehend vermieden. Das vorgeschlagene Kommunikationsverfahren ist nicht rechenintensiv und somit auch ressourcenschonend.

Vorteilhaft ist, wenn die Systemkomponenten zugriffssichere Datenbereiche aufweisen, in welchen die Hash-Funktion und die mit dem Wertebereich der Hash-Funktion verknüpften Prüfcodes abgelegt werden.

Dadurch wird das Ausspionieren bzw. Re-Engineering deutlich erschwert.

Erfindungsgemäß kann ferner vorgesehen sein, dass die Initialisierungsphase bei der Endabnahme bzw. Bandendeprüfung der Systemkomponenten in dem Kraftfahrzeug erfolgt.

Dabei übermittelt die erste, übergeordnete Systemkomponente den Startcode aₙ an die zweite Systemkomponente. Idealerweise wird dann die Prüfung vorgenommen, ob Startcode an und Hash-Funktion zueinander passen. Ein geeigneter Test wäre z.B. die Mitteilung von aₙ₋₁ durch die erste Systemkomponente und der entsprechende Test in der zweiten Systemkomponente ob aₙ = h(aₙ₋₁).

Durch ein paarweises Austauschen der Startcodes aₙ können die Systemkomponenten wechselseitig als Sender und Empfänger eingesetzt werden.

Vorteilhaft ist, wenn mehrere verschiedene Hash-Funktionen und/oder natürliche Zahlen n nach einem vorgegebenen oder verschlüsselt mitgeteilten Schema eingesetzt werden.

Dadurch können Attacken durch Eindringlinge weiter minimiert werden.

Erfindungsgemäß kann vorgesehen sein, dass das Senden des neuen Startcodes aₙ verschlüsselt erfolgt.

Als zeitveränderliches Signal kann beispielsweise der Kilometerstand des Fahrzeugs oder die Uhrzeit beim Fahrzeugstart (Klemme 15) herangezogen werden.

Um die Zuverlässigkeit der Kommunikation zweier Systemkomponenten eines Kraftfahrzeugs über ein CAN-Bussystem des Kraftfahrzeugs weiter zu steigern, können die Nutzdaten eines Nachrichtenpakets eine zusätzliche CRC-Prüfsumme aufweisen.

Eine Erhöhung des für die Nutzdaten verfügbaren Bereichs bzw. der Zuverlässigkeit wird durch Versenden der Nachrichten auf wenigstens zwei physikalisch getrennten Medien, insbesondere CAN-Busleitungen und anschließendem Vergleich beim Empfänger erreicht.

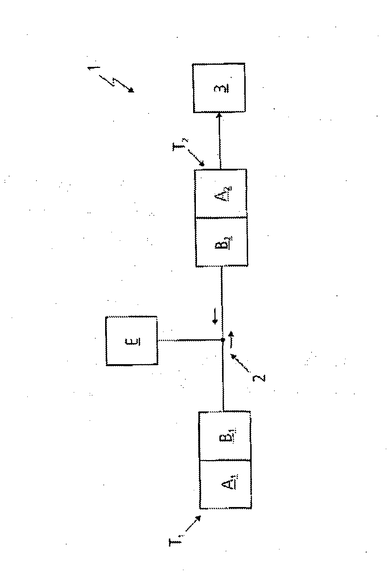

Vorteilhafte Ausgestaltungen und Weiterbildungen der Erfindung ergeben sich aus den weiteren Unteransprüchen. Nachfolgend ist anhand der Zeichnung prinzipmäßig ein Ausführungsbeispiel beschrieben.

Die einzige Figur der Zeichnung zeigt eine Netzwerktopologie 1 zwischen einer als ESP-Steuergerät ausgebildeten übergeordneten ersten Systemkomponente T₁ und einer als Lenksystemsteuergerät ausgebildeten untergeordneten zweiten Systemkomponente T₂ eines Kraftfahrzeugs, welche einen direkten Zugriff auf einen vorliegend als Lenksystem ausgebildeten Aktuator 3 ermöglicht. Die Netzwerkverbindung erfolgt über ein CAN-Bussystem 2. Das Lenksystemsteuergerät T₂ kann Teil eines Aktivlenksystems sein, wie es beispielsweise in der DE 196 01 826 A1 beschrieben ist.

Einem Eindringling E ist die Spezifikation des CAN-Busprotokolls bekannt, d.h. er weiß welche Signale auf welche Art verschlüsselt an welchem Ort liegen. Des weiteren kennt der Eindringling E Teile B₁ und B₂ der Systemkomponenten T₁, T₂. Die Teile B₁ und B₂ kommunizieren direkt mit dem CAN-Bussystem 2 und weisen unter anderem die CRC-Codierungsmechanismen zur Bitfehlererkennung und die Signalaufbereitung auf.

Mit Hilfe der erfindungsgemäßen Kommunikationsverfahren soll nun verhindert werden, dass der Eindringling E aufgrund seiner Kenntnisse ein sicherheitsrelevantes Signal bzw. eine sicherheitsrelevante Nachricht der ersten Systemkomponente T₁ an die zweite Systemkomponente T₂ auf die passende Stelle im CAN-Bussystem 2 legt, entsprechend absichert und insbesondere das Signal der ersten Systemkomponente T₁ damit überschreibt und dieses gefälschte Signal dann von der zweiten Systemkomponente T₂ auch akzeptiert wird.

Dazu werden vom Erfinder zwei Kommunikationsverfahren vorgeschlagen.
1. Die Systemkomponenten T₁, T₂ halten jeweils eine vorgegebene feste Anzahl von nur ihnen bekannten Prüfcodes bereit. Basierend auf einem zeitveränderlichen Signal, welches beiden Systemkomponenten T₁, T₂ zugänglich ist, wird beim Fahrzeugstart von beiden Systemkomponenten T₁, T₂ über eine, vorliegend als Hash-Funktion ausgebildete, Zuordnungsfunktion einer der Prüfcodes ausgewählt und mit diesem die zu übertragenden Nutzdaten codiert. Die Zuordnungsfunktion und die Prüfcodes werden in zugriffssicheren Datenbereichen A₁, A₂ der Systemkomponenten T₁, T₂ abgelegt.
   Problematisch ist hierbei, dass der Eindringling E nur einmal in den Besitz der Zuordnungsfunktion und der Prüfcodes gelangen muss, um die Authentifizierung dauerhaft umgehen zu können.
2. Die erste Systemkomponente T₁ und die zweite Systemkomponente T₂ verfügen gemeinsam über eine Hash-Funktion h, eine natürliche Zahl n und mehrere Prüfcodes. Die erste Systemkomponente T₁ berechnet anhand einer Zufallszahl a₀ eine Hash-Kette aᵢ₊₁ = h(aᵢ) der Länge n, verknüpft die Prüfcodes mit den jeweiligen aᵢ und legt das letzte Element aₙ der Hash-Kette als Startcode bzw. öffentlichen Schlüssel offen. Bei jeder nachfolgenden Authentifizierung für 0 < i < n:
   - übermittelt die erste Systemkomponente T₁ ein Nutzdatum zusammen mit dem mit aᵢ verknüpften Prüfcode unverschlüsselt oder das Nutzdatum mit dem mit dem aktuellen Element aᵢ verknüpften Prüfcode verschlüsselt an die zweite Systemkomponente T₂, wonach
   - die erste Systemkomponente T₁ das Element aᵢ an die zweite Systemkomponente T₂ übermittelt, wonach
   - die zweite Systemkomponente T₂ mittels der Hash-Kette aᵢ₊₁ = h(aᵢ) das von der ersten Systemkomponente T₁ übersandte Element aᵢ überprüft, und bei Übereinstimmung das übersandte Nutzdatum akzeptiert und/oder entschlüsselt.

Bei jedem erneuten Fahrzeugstart wird i um 1 dekrementiert und somit ein neues Element aᵢ₋₁ ausgewählt, wobei bei i = 0 beim nächsten Fahrzeugstart wieder wie oben beschrieben ein neuer Startcode aₙ generiert und durch die erste Systemkomponente T₁ offengelegt wird.

Zur Verschlüsselung kann ein beliebiges Verfahren angewendet werden.

Die Hash-Funktion h und die Prüfcodes werden in zugriffssicheren Datenbereichen A₁, A₂ der Systemkomponenten T₁, T₂ abgelegt.

Die Initialisierungsphase erfolgt bei der Bandendeprüfung der Systemkomponenten T₁, T₂ in dem Kraftfahrzeug. Dabei übermittelt die erste, übergeordnete Systemkomponente T₁ den Startcode bzw. den öffentlichen Schlüssel aₙ an die zweite Systemkomponente T₂. Idealerweise wird dann die Prüfung vorgenommen, ob der Startcode aₙ und die Hash-Funktion h zueinander passen. Ein geeigneter Test wäre z. B. die Mitteilung von aₙ₋₁ und der entsprechende Test in der zweiten Systemkomponente T₂ ob aₙ = h(aₙ₋₁).

Durch ein paarweises Austauschen der Startcodes aₙ können die Systemkomponenten T₁, T₂ in einem weiteren Ausführungsbeispiel wechselseitig als Sender und Empfänger eingesetzt werden.

Sichere Hash-Funktionen wie z.B. SHA-1 weisen eine Länge von 160 Bit auf, welche eine CAN-Busbotschaftslänge übersteigen. Da der Schlüssel bei Systemstart anstelle einer Nutzbotschaft übertragen werden kann, sind 34 Bit denkbar. Um die Wahrscheinlichkeit einer Attacke zu minimieren, können mehrere Hash-Funktionen h und/oder natürliche Zahlen n nach einem vorgegebenen oder verschlüsselt mitgeteilten Schema eingesetzt werden.

Im vorliegenden Ausführungsbeispiel erfolgt das Senden des neuen Startcodes aₙ verschlüsselt. Ein unverschlüsseltes Senden ist jedoch auch möglich.

Um die Restfehlerwahrscheinlichkeiten bei der Übertragung zu minimieren, wird vom Erfinder zur Erfüllung der Forderung F2 das nachfolgende Kommunikationsverfahren für das CAN-Bussystem vorgeschlagen.

Die Nutzdaten eines CAN-Nachrichtenpakets weisen dazu eine zusätzliche CRC-Prüfsumme auf. Zusätzlich kann auch ein Zeitstempel vorgesehen sein.

Eine zusätzliche Zuverlässigkeit wird durch Versenden der Nachrichten auf wenigstens drei physikalisch getrennten Medien, insbesondere CAN-Busleitungen und anschließendem Vergleich beim Empfänger T₂ erreicht.

Der Erfinder hat festgestellt, dass je nach Signal Integrity Level (SIL) gemäß IEC 61508 "Functional Safety of E/E/PES Systems. IEC, Geneve, Switzerland, Edition 1[1].0 b. 1998/12/01" des zu übertragenden Signals eine 20 bis 26 Bit CRC-Prüfsumme für eine sichere Übertragung ausreicht. Diese muss von der CRC-15-Bitfehlererkennung des Standard-CAN-Übertragungsprotokolls verschieden sein.

Bei einer Übertragung über nur eine CAN-Busleitung würde eine SIL3-Botschaft sich wie folgt zusammensetzen:
- 26 Bit CRC-Prüfsumme;
- 4 Bit Zeitstempel;
- 34 Bit Nutzdatum;
- CRC-15 im Standard-CAN-Übertragungsprotokoll

Wird ein SIL3-Signal über zwei physikalisch getrennte Busleitungen übertragen, so reicht eine SIL2-Absicherung auf beiden Leitungen und ein entsprechender Vergleich. Sind beide Medien Standard-CAN-Busleitungen mit CRC-15-Absicherung, so genügt eine zusätzliche Sicherung mit einer CRC-23-Absicherung je Busleitung. Somit wird der Nutzbereich der Pakete nur um 23 Bit verringert. Wenn drei Busleitungen verwendet werden und alle drei wie vorstehend beschrieben nach SIL2 ausgeführt werden, kann über eine entsprechende Zwei-aus-drei-Entscheidung des Empfängers die Verfügbarkeit erhöht werden.

### Bezugszeichen

- 1: Netzwerktopologie
- 2: CAN-Bussystem
- 3: Aktuator bzw. Lenksystem
- T₁, T₂: Systemkomponenten
- A₁, A₂: sichere Bereiche
- B₁, B₂: Kommunikationsteile
- E: Eindringling

## Patentansprüche

1. Kommunikationsverfahren für wenigstens zwei Systemkomponenten (T₁, T₂) eines Kraftfahrzeugs über eine Netzwerkverbindung, insbesondere ein CAN-Bussystem (2) des Kraftfahrzeugs, wobei
1.1. eine erste Systemkomponente (T₁) und eine zweite Systemkomponente (T₂) gemeinsam über mehrere Hash-Funktionen h, natürliche Zahlen n und mehrere Prüfcodes verfügen, wobei
1.2. die erste Systemkomponente (T₁) anhand einer Zufallszahl a₀ eine Hash-Kette aᵢ₊₁ - h(aᵢ) der Länge n berechnet, die Prüfcodes mit den jeweiligen aᵢ verknüpft und das letzte Element aₙ der Hash-Kette als Startcode offen legt, wonach
1.3.bei jeder nachfolgenden Authentifizierung für 0 < i < n
1.3.1. die erste Systemkomponente (T₁) ein Nutzdatum zusammen mit dem mit dem aktuellen Element aᵢ verknüpften Prüfcode unverschlüsselt oder das Nutzdatum mit dem mit dem aktuellen Element aᵢ verknüpften Prüfcodes verschlüsselt an die zweite Systemkomponente (T₂) übermittelt, wonach
1.3.2. die erste Systemkomponente (T₁) das aktuelle Element aᵢ an die zweite Systemkomponente (T₂) übermittelt, wonach
1.3.3.die zweite Systemkomponente (T₂) mittels der Hash-Kette aᵢ₊₁ - h(aᵢ) das von der ersten Systemkomponente (T₁) übersandte aktuelle Element aᵢ überprüft, und bei Übereinstimmung das übersandte Nutzdatum akzeptiert und/oder entschlüsselt, wobei
1.3.4.bei jedem erneuten Fahrzeugstart i um 1 dekrementiert und somit ein neues Element aᵢ₋₁ ausgewählt wird, wobei
1.4.bei i = 0 beim nächsten Fahrzeugstart wieder mit Schritt 1.2 fortgefahren wird, **dadurch gekennzeichnet, dass** die verschiedenen Hash-Funktionen h und natürlichen Zahlen n nach einem vorgegebenen oder verschlüsselt mitgeteilten Schema eingesetzt werden.

2. Kommunikationsverfahren nach Anspruch 1,
**dadurch gekennzeichnet, dass** die Hash-Funktionen h und die mit dem Wertebereich der Hash-Funktionen h verknüpften Prüfcodes in zugriffssicheren Datenbereichen (A₁, A₂) der Systemkomponenten (T₁, T₂) abgelegt werden.

3. Kommunikationsverfahren nach Anspruch 1 oder 2,
**dadurch gekennzeichnet, dass** eine Initialisierungsphase nach Schritt 1.2 bei der Endabnahme der Systemkomponenten (T₁,T₂) in dem Kraftfahrzeug erfolgt.

4. Kommunikationsverfahren nach Anspruch 1, 2 oder 3,
**dadurch gekennzeichnet, dass** die Systemkomponenten (T₁,T₂) wechselseitig als Sender und Empfänger eingesetzt werden, wobei ein paarweises Austauschen der jeweiligen Startcodes an erfolgt.

5. Kommunikationsverfahren nach einem der Ansprüche 1 bis 4,
**dadurch gekennzeichnet, dass** das Senden des neuen Startcodes aₙ verschlüsselt erfolgt.

6. Kommunikationsverfahren nach einem der Ansprüche 1 bis 5,
**dadurch gekennzeichnet, dass** als erste Systemkomponente ein ESP-Steuergerät (T₁) und als zweite Systemkomponente ein Lenksystemsteuergerät (T₂) eingesetzt wird.

## Claims

1. Communication method for at least two system components (T₁, T₂) of a motor vehicle via a network connection, in particular a CAN bus system (2) of the motor vehicle,
1.1. a first system component (T₁) and a second system component (T₂) together having a plurality of hash functions h, natural numbers n and a plurality of check codes,
1.2. the first system component (T₁) calculating a hash chain aᵢ₊₁ - h(aᵢ) of the length n using a random number a₀, linking the check codes to the respective a₁ and leaving the last element aₙ of the hash chain open as a start code, after which
1.3. during each subsequent authentication for 0 < i < n,
1.3.1. the first system component (T₁) transmits a useful data item together with the check code linked to the current element aᵢ to the second system component (T₂) in unencrypted form or transmits the useful data item with the check code linked to the current element aᵢ to the second system component (T₂) in encrypted form, after which
1.3.2. the first system component (T₁) transmits the current element aᵢ to the second system component (T₂), after which
1.3.3. the second system component (T₂) checks the current element aᵢ transmitted by the first system component (T₁) using the hash chain aᵢ₊₁ = h(aᵢ), and accepts and/or decrypts the transmitted useful data item in the event of a match,
1.3.4. i being decremented by 1 each time the vehicle is started again and a new element aᵢ₋₁ therefore being selected,
1.4 the process being continued with step 1.2 again the next time the vehicle is started if i = 0, **characterized in that** the different hash functions h and natural numbers n are used according to a predefined scheme or a scheme which is communicated in encrypted form.

2. Communication method according to Claim 1,
**characterized in that**
the hash functions h and the check codes which are linked to the value range of the hash functions h are stored in access-protected data areas (A₁, A₂) of the system components (T₁, T₂).

3. Communication method according to Claim 1 or 2,
**characterized in that**
an initialization phase is carried out after step 1.2 during the final acceptance of the system components (T₁, T₂) in the motor vehicle.

4. Communication method according to Claim 1, 2 or 3,
**characterized in that**
the system components (T₁, T₂) are alternatingly used as transmitters and receivers, in which case the respective start codes aₙ are interchanged in pairs.

5. Communication method according to one of Claims 1 to 4,
**characterized in that**
the new start code aₙ is transmitted in encrypted form.

6. Communication method according to one of Claims 1 to 5,
**characterized in that**
an ESP control unit (T₁) is used as the first system component and a steering system control unit (T₂) is used as the second system component.

## Revendications

1. Procédé de communication pour au moins deux des composants système (T₁, T₂) d'un véhicule par l'intermédiaire d'une connexion de réseau, notamment un système de bus CAN (2) du véhicule, dans lequel
1.1. un premier composant système (T₁) et un second composant système (T₂) disposent en commun, par l'intermédiaire d'une pluralité de fonctions de hachage h, de nombres naturels n et d'une pluralité de codes de vérification, dans lequel
1.2. le premier composant système (T₁), sur la base d'un nombre aléatoire a₀, calcule une chaîne de hachage aᵢ₊₁ = h(aᵢ) de longueur n, associe le code de vérification au aᵢ respectif et délivre le dernier élément aₙ de la chaîne de hachage en tant que code de démarrage, puis
1.3. lors de chaque authentification suivante, pour 0 < i < n,
1.3.1. le premier composant système (T₁) transmet de manière décryptée au second composant système (T₂) une donnée utilisateur en association avec le code de vérification associé à l'élément actuel aᵢ ou transmet de manière cryptée la donnée utilisateur avec le code de vérification associé à l'élément actuel aᵢ, puis 1.3.2. le premier composant système (T₁) transmet au second composant système (T₂) l'élément actuel aᵢ, puis 1.3.3. le second composant système (T₂) vérifie au moyen de la chaîne de hachage aᵢ₊₁ = h(aᵢ) l'élément actuel aᵢ envoyé par le premier composant système (T₁), et accepte et/ou décrypte la donnée utilisateur envoyée en cas de concordance, dans lequel
1.3.4. à chaque nouveau démarrage, i est décrémenté de 1 de telle sorte qu'un nouvel élément aᵢ₋₁ soit sélectionné, dans lequel
1.4. pour i = 0, lors du démarrage suivant du véhicule, l'étape 1.2 est recommencée,
**caractérisé en ce que** les différentes fonctions de hachage h et les différents nombres naturels n sont définies conformément à un schéma établi ou communiqué de manière cryptée.

2. Procédé de communication selon la revendication 1, **caractérisé en ce que** les fonctions de hachage h et les codes de vérification associés au domaine de valeurs des fonctions de hachage h sont stockés dans une zone de données (A₁, A₂) non falsifiable des composants système (T₁, T₂).

3. Procédé de communication selon la revendication 1 ou 2, **caractérisé en ce qu'**une phase d'initialisation est effectuée après l'étape 1.2 lors de l'inspection finale des composants système (T₁, T₂) dans le véhicule.

4. Procédé de communication selon la revendication 1, 2 ou 3, **caractérisé en ce que** les composants système (T₁, T₂) sont alternativement utilisés en tant qu'émetteur et récepteur, un remplacement des codes de démarrage aₙ respectifs étant effectué par paires.

5. Procédé de communication selon l'une quelconque des revendications 1 à 4, **caractérisé en ce que** l'émission du nouveau code de démarrage aₙ s'effectue de manière cryptée.

6. Procédé de communication selon l'une quelconque des revendications 1 à 5, **caractérisé en ce qu'**un dispositif de commande ESP (T₁) est utilisé en tant que premier composant système, et **en ce qu'**une unité de commande du système de direction (T₂) est utilisée en tant que second composant système.
